(19) **Europäisches Patentamt / European Patent Office / Office européen des brevets**

(11) **EP 4 631 620 A1**

(12) **EUROPEAN PATENT APPLICATION**
published in accordance with Art. 153(4) EPC

(43) Date of publication:
**15.10.2025 Bulletin 2025/42**

(21) Application number: **23901038.2**

(22) Date of filing: **04.12.2023**

(51) International Patent Classification (IPC):
*B01J 23/83* (2006.01)   *B01J 23/745* (2006.01)
*B01J 21/02* (2006.01)   *B01J 21/06* (2006.01)
*B01J 23/06* (2006.01)   *B01J 23/75* (2006.01)
*B01J 37/02* (2006.01)   *B01J 37/16* (2006.01)
*B01D 53/86* (2006.01)

(52) Cooperative Patent Classification (CPC):
**B01D 53/86; B01J 21/02; B01J 21/06; B01J 23/06;
B01J 23/745; B01J 23/75; B01J 23/83;
B01J 37/02; B01J 37/16**

(86) International application number:
**PCT/KR2023/019823**

(87) International publication number:
**WO 2024/123019 (13.06.2024 Gazette 2024/24)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **05.12.2022   KR 20220167943**

(71) Applicant: **GS Caltex Corporation
Seoul 06141 (KR)**

(72) Inventors:
• **LEE, Jung Joon**
  **Seoul 06141 (KR)**
• **KIM, Woo Young**
  **Seoul 06141 (KR)**
• **OH, Jinho**
  **Seoul 06141 (KR)**
• **SONG, Changyeol**
  **Seoul 06141 (KR)**

(74) Representative: **Zacco Sweden AB
P.O. Box 5581
Löjtnantsgatan 21
114 85 Stockholm (SE)**

(54) **CATALYST FOR DIRECT CONVERSION OF CARBON DIOXIDE IN EXHAUST GAS, AND EXHAUST GAS TREATMENT METHOD USING SAME**

(57)    The disclosure relates to a catalyst for direct conversion of $CO_2$ in flue gas, capable of direct converting carbon dioxide, and an flue gas treatment method using the same.

[FIG. 3]

EP 4 631 620 A1

## Description

### [Technical Field]

The disclosure relates to a catalyst for direct conversion of carbon dioxide in flue gas, and an flue gas treatment method.

### [Background Art]

For the mitigation of global warming and the reduction of greenhouse gases, efforts are being made to reduce $CO_2$. For example, Korean Patent No. 10-2465990 discloses a selective catalytic reduction complex system for simultaneous pre-removal of vapor and carbon dioxide in flue gas.

However, flue gas generated from a refining or petrochemical process contains not only $CO_2$ but also other gas species, and thus there is difficulty in conversion of $CO_2$. In addition, a molar ratio of $H_2$ to $CO_2$ in the flue gas is lower than that favorable to the conversion of $CO_2$ ($H_2/CO_2$ = greater than 3), thereby making a conversion reaction of $CO_2$ more difficult.

Meanwhile, Korean Patent Publication No. 10-2021-0111580 discloses catalysts for preparing linear alpha olefine by using simultaneous hydrogenation of CO and $CO_2$ from a synthesis gas rich in carbon dioxide. However, a molar ratio of $H_2/(CO+CO_2)$ in this synthesis gas is also equal to or greater than 2, and thus the content of hydrogen is high.

Accordingly, while studying an efficient $CO_2$ conversion method for the flue gas that has a low molar ratio of $H_2/CO_2$ and contains other gas species as well as $CO_2$, the inventors confirmed that a catalyst and process according to the disclosure enable the efficient conversion of $CO_2$ with only a single process, and completed the disclosure.

### [Disclosure]

### [Technical Problem]

An aspect of the disclosure is to efficiently convert $CO_2$ in flue gas generated in a refining and/or petrochemical process.

### [Technical Solution]

An embodiment of the disclosure provides a catalyst for direct conversion of $CO_2$ in flue gas, including a promoter selected from the group consisting of Ce, Zn, Zr and Co.

Further, an embodiment of the disclosure provides an flue gas treatment method using a catalyst for direct conversion of $CO_2$ in flue gas.

### [Advantageous Effects]

With a catalyst according to the disclosure and an flue gas treatment method using the same, $CO_2$ in flue gas generated in a refining or petrochemical process is efficiently converted into useful chemical substances.

### [Description of Drawings]

FIG. 1 shows a $CO_2$ conversion complex process scheme for flue gas according to the disclosure.
FIG. 2 shows difference in conversion of CO and $CO_2$ according a preparation method of a catalyst and types of promoters used in the catalyst.
FIG. 3 shows difference in conversion of CO and $CO_2$ by a catalyst in flue gas according to the content of $CeO_2$ in a catalyst.

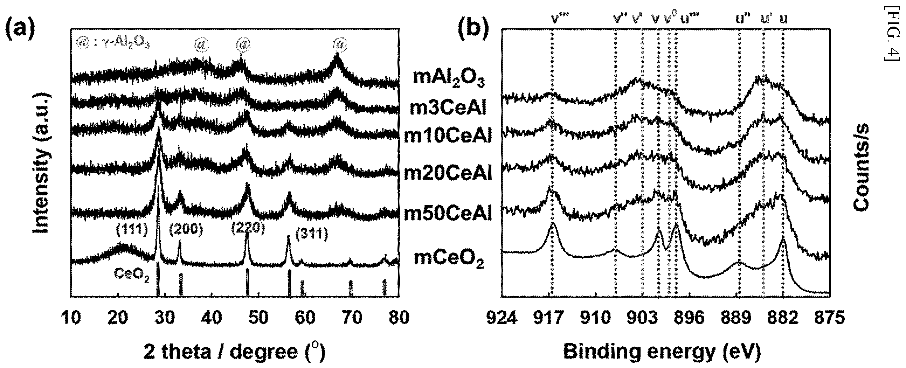

FIG. 4a shows XRD analysis results for identifying the crystal structure of a $CeO_2$-$Al_2O_3$ support according to the content of $CeO_2$. FIG. 4b shows X-ray photoelectron spectroscopy (XPS) results that $Ce^{4+}$ and $Ce^{3+}$ are present in a mixed state as the content of $CeO_2$ increases compared to that of $Al_2O_3$. In the case of $CeO_2$, only $Ce^{4+}$ is present as confirmed by the XPS results. The peaks corresponding to $Ce^{4+}$ are shown at the binding energies of 916.8, 906.7, 900, 897, 886 and 882 eV. However, in the case of $CeO_2$ mixed with $Al_2O_3$, $Ce^{3+}$ is formed, $Ce^{4+}$ increases with the increasing content of $CeO_2$, and the peaks corresponding to $Ce^{4+}$ in the XPS are remarkably enhanced.
FIG. 5 shows CO-temperature programed desorption (TPD) analysis results of adsorption of CO in feed on the surface of a catalyst and thermal energy required for desorption.

FIG. 6 shows $CO_2$-temperature programed desorption (TPD) analysis results of adsorption of $CO_2$ in feed on the surface of a catalyst and thermal energy required for desorption.

FIG. 7 shows results of an adsorption trend of CO and $CO_2$ depending on the content of $CeO_2$.

**[Mode for Invention]**

The disclosure relates to a catalyst for direct conversion of carbon dioxide in flue gas.

Further, the disclosure relates to an flue gas treatment method using a catalyst for direct conversion of carbon dioxide in flue gas according to the disclosure.

Further, the disclosure relates to a method of treating flue gas, including the steps of:

pretreating a catalyst for direct conversion of carbon dioxide in the flue gas with a reducing gas; and
applying the flue gas to the pretreated catalyst.

Below, the disclosure will be described in detail.

A catalyst for direct conversion of carbon dioxide in flue gas

The catalyst according to the disclosure is a catalyst for direct conversion of carbon dioxide in the flue gas. The catalyst of the disclosure may be a catalyst containing Fe. In one embodiment, the catalyst for the direct conversion of $CO_2$ in the flue gas according to the disclosure may contain Fe, Cu, Al, K, Na, etc.

The catalyst for the direct conversion of carbon dioxide in the flue gas according to the disclosure may contain a promoter selected from the group consisting of Ce, Zn, Zr and Co. Preferably, the promoter may be Ce. In one embodiment, the catalyst for the direct conversion of carbon dioxide in the flue gas according to the disclosure may contain Fe, Cu, K, Al and Ce. In one embodiment, the catalyst for the direct conversion of carbon dioxide in the flue gas according to the disclosure may contain Fe, Cu, K, Al and Zn. In one embodiment, the catalyst for the direct conversion of carbon dioxide in the flue gas according to the disclosure may contain Fe, Cu, K, Al and Zr. In one embodiment, the catalyst for the direct conversion of carbon dioxide in the flue gas according to the disclosure may contain Fe, Cu, K, Al and Co.

In one embodiment, the catalyst according to the disclosure may contain Fe, Cu, K, and Al. In this case, the catalyst may contain 8 to 14 parts by weight of Cu, 9 to 18 parts by weight of Al, 15 to 20 parts by weight of K, based on 100 parts by weight of Fe. In one example, Fe, Cu, K, and Al in the catalyst according to the disclosure may be present in amounts of 69.8 wt% Fe, 8.6 wt% Cu, 9.6 wt% Al, and 12 wt% K, respectively. In one example, a weight ratio of K/Fe in the catalyst according to the disclosure may range from 0.15 to 0.2, may range from 0.155 to 0.195, may range from 0.16 to 0.19, may range from 0.165 to 0.185, and may be 0.17.

The catalyst for the direct conversion of carbon dioxide in the flue gas according to the disclosure may have conversion activity of CO or $CO_2$ in the flue gas without CO-based pretreatment. This is because the catalyst for the direct conversion of carbon dioxide in the flue gas according to the disclosure facilitates the adsorption and conversion of CO and $CO_2$ without activating Fe through the CO-based pretreatment.

In one embodiment, with the catalyst for the direct conversion of carbon dioxide in the flue gas according to the disclosure, a conversion rate of carbon dioxide by pretreatment using a reducing gas that does not contain CO may be greater than 5%, greater than 10%, and greater than 13%. Further, with the catalyst for the direct conversion of carbon dioxide in the flue gas according to the disclosure, a conversion rate of carbon dioxide by pretreatment using a reducing gas that does not contain CO may be less than 50%, less than 40%, less than 30%, and less than 25%.

In one embodiment, with the catalyst for the direct conversion of carbon dioxide in the flue gas according to the disclosure, a conversion rate of both carbon dioxide and carbon monoxide by pretreatment using a reducing gas that does not contain CO may be greater than 5%, greater than 10%, greater than 13%, and greater than 15%. Further, with the catalyst for the direct conversion of carbon dioxide in the flue gas according to the disclosure, a conversion rate of both carbon dioxide and carbon monoxide by pretreatment using a reducing gas that does not contain CO may be less than 50%, less than 40%, less than 30%, or less than 25%.

The catalyst for the direct conversion of carbon dioxide in the flue gas according to the disclosure may be reduced by treatment using one or more reducing gases selected from the group consisting of $CH_4$, $H_2$, CO, $C_3H_8$, and $C_4H_{10}$.

The catalyst for the direct conversion of carbon dioxide in the flue gas according to the disclosure may contain 1 to 60 wt%, 2 to 55 wt%, 10 to 30 wt%, 15 to 25 wt%, 2 to 7 wt%, 7 to 15 wt%, 20 to 40 wt% and 30 to 60 wt% of one or more oxides selected from the group consisting of $CeO_2$, $ZrO_2$, ZnO and $Co_mO_n$, based on 100 wt% $Al_2O_3$. In this case, m may be 1, 2 or 3, and n may be 1, 2, 3 or 4. In one example, $Co_mO_n$ may be $Co_3O_4$, CoO, or $Co_2O_3$.

The catalyst for the direct conversion of carbon dioxide in the flue gas according to the disclosure may have conversion activity of $CO_2$ in the flue gas, in which $H_2/CO_2$ range from 0.0001 to 2.5, or range from 0.0001 to 2. In this case,

$H_2/CO_2$ may be calculated as a molar ratio. In general, a higher content of $H_2$ leads to more favorable conditions for the conversion of carbon dioxide; for example, when a molar ratio of $H_2/CO_2$ is 3, the condition is thermodynamically optimal. However, the flue gas discharged from the refining or petrochemical industries contains a low content of $H_2$, and thus $H_2/CO_2$ may often range from 0.0001 to 2.5, or from 0.0001 to 2. The catalyst according to the disclosure is useful for conversion of carbon dioxide in this flue gas. In the case of a catalyst of $K/FeCuAl_2O_3$, when the flue gas (HMP purge gas) is used as feed, there are disadvantages in that a conversion rate of carbon dioxide is relatively low and the selectivity of $CH_4$ is high. However, the catalyst according to the disclosure enables the direct conversion of $CO_2$ in the flue gas with a single process, and adjusts the selectively of produced chemical substances by adjusting the type and content of the promoter.

In other words, to increase the conversion rate of $CO_2$ or decrease the selectivity of $CH_4$ under conditions that a ratio of $H_2/CO_2$ is low, it is required to forcibly increase the ratio of $H_2/CO_2$ by adding a hydrogen supply facility allowing for the external supply of hydrogen, a reforming process of converting $CH_4$ into CO and $H_2$ to prepare syngas, or a process of capturing $CO_2$ in addition to the direct conversion process of $CO_2$. For instance, there is a method of converting the flue gas into syngas through the reforming process, and converting the syngas into a chemical product through the Fischer-Tropsch (F-T) process. Further, there is a method of adding the $CO_2$ capturing process to the upstream or downstream of the process to increase the $CO_2$ conversion rate by increasing the ratio of $H_2/CO_2$ in the upstream, or to increase the $CO_2$ conversion rate by recycling $CO_2$ remaining after the reaction liked to the downstream. In this case, the syngas refers to a gas that contains only CO and $H_2$, and is distinguished from the flue gas that is a mixed gas discharged from the refining and/or petrochemical process and containing various components. The syngas contains only CO and $H_2$, and is easier to treat than the flue gas containing $CO_2$. However, process costs are incurred when the conversion of $CO_2$ is performed by adding the reforming process, the $CO_2$ capture process, etc. or by a series of liked processes involving two or more processes, thereby leading to economic losses in the long term.

The catalyst according to the disclosure enables the conversion of CO and/or $CO_2$ in the flue gas into useful chemical substances by directly applying the flue gas discharged from the refining and/or petrochemical process to the catalyst without such a reforming process, $CO_2$ capture process, etc. Preferably, an flue gas treatment method using the catalyst according to the disclosure may not include one or more selected from the group consisting of a gasification process, a gas purification process, an acid gas removal process, a reforming process and a $CO_2$ capture process. This simplifies the process facilities, reduces process operation costs, and expands the scope of utilizing the produced chemical substances. Further, the disclosure provides a catalyst process system that allows for the conversion of low purity $CO_2$ into value-added chemical products such as basic feedstock and naphtha through a single process.

The catalyst for the direct conversion of carbon dioxide in the flue gas according to the disclosure may be prepared by co-precipitation (CP), impregnation (IMP), or solid-state reaction (SSR), and may be prepared preferably by the SSR. When the catalyst according to the disclosure is prepared by the SSR, cerium nitrate and aluminum nitrate are added during a metal precursor mixing process, and all metals (e.g., Fe, Cu, K, Al, Ce) exist in the form of metal oxide through a calcination process after mixing and are subsequently reduced through a reduction pretreatment process.

The flue gas treatment method according to the disclosure includes a process of reducing the catalyst through a pretreatment step to form catalyst activation. The reducing gas used in the pretreatment step is not particularly limited as long as it is a reducing gas species that converts catalytic metal oxide into metal. For instance, the reducing gas may be one or more selected from among $CH_4$, $H_2$, CO, $C_3H_8$, $C_4H_{10}$, etc. The reducing gas may be one gas species, or a mixture of two or more gas species. In a particular case of, the catalyst according to the disclosure, particularly, the catalyst containing $CeO_2$, a reducing gas that does not contain CO may be used for the pretreatment to form hydrocarbons having carbon numbers of $C_2$ or higher through the conversion of $CO_2$.

The flue gas according to the disclosure may be an flue gas generated in the refining and/or petrochemical process. For example, the flue gas may be an flue gas generated in a hydrogen manufacturing process (HMP), residue fluid catalytic cracking (RFCC), crude distillation unit (CDU), vacuum distillation unit (VDU), reforming process, etc. during the refining process. Although the flue gas is a mixed gas that contains other gas species in addition to $CO_2$, the efficient conversion of $CO_2$ is possible using the catalyst according to the disclosure. The flue gas may contain one or more components selected from the group consisting of $H_2$, $CO_2$, CO, $CH_4$, S, $O_2$, $N_2$, $H_2O$, $SO_x$, $NO_x$ and $H_2O$. In this case, $x$ may be an integer not greater than 3. The S may be present in the form of hydrogen sulfide. The content of $H_2$ contained in the flue gas is so low that $H_2/CO_2$ may range from 0.0001 to 2.5, or range from 0.0001 to 2. The flue gas is directly applied to the catalyst according to the disclosure in feed, thereby producing chemical substances through a hydrogenation reaction of $CO_2$ in the flue gas. In one embodiment, the flue gas according to the disclosure contains an excess amount of $CO_2$, and further contains CO and $CH_4$. In this case, $CH_4$ is present as an inert gas. However, the use of the catalyst according to the disclosure allows for the direct conversion of even $CO_2$ in the flue gas into useful chemical substances.

In one example, the flue gas according to the disclosure may have the composition shown in Table 1. In this case, the composition of each flue gas discharged in the CDU/VDU processes, reforming process, fluid catalytic cracking (FCC) process, and hydrogen manufacturing process (HMP) may be as shown in Table 1. In one example, the flue gas according to the disclosure may contain 5 to 30 v/v% of $CO_2$. In one example, the flue gas according to the disclosure may contain 50 to 80 v/v% of $N_2$. In one example, the flue gas according to the disclosure may contain 0.5 to 15 v/v% of $O_2$. In one example,

the flue gas according to the disclosure may contain 5 to 30 v/v% of $H_2O$. In one example, the flue gas according to the disclosure may contain 5 to 30 v/v% of $CO_2$, 50 to 80 v/v% of $N_2$, 0.5 to 15 v/v% of $O_2$, and 5 to 30 v/v% of $H_2O$. In one example, the flue gas according to the disclosure may contain 10 to 65 v/v% of $CO_2$. In one example, the flue gas according to the disclosure may contain 1 to 15 v/v% of $N_2$. In one example, the flue gas according to the disclosure may contain 0.01 to 1 v/v% of $O_2$. In one example, the flue gas according to the disclosure may contain 1 to 25 v/v% of $CH_4$. In one example, the flue gas according to the disclosure may contain 1 to 23 v/v% of CO. In one example, the flue gas according to the disclosure may contain 10 to 55 v/v% of $H_2$. In one example, the flue gas according to the disclosure may contain 10 to 65 v/v% of $CO_2$, 1 to 15 v/v% of $N_2$, 0.01 to 1 v/v% of $O_2$, 1 to 25 v/v% of $CH_4$, 1 to 23 v/v% of CO, and 10 to 55 v/v% of $H_2$.

[Table 1]

| vol% | CDU/VDU | Reforming | FCC | HMP |
|---|---|---|---|---|
| $CO_2$ | 5~30 | 3~20 | 5~35 | 10~65 |
| $N_2$ | 50~80 | 53~82 | 52~81 | 1~15 |
| $O_2$ | 0.5~15 | 0.5~10 | 0.5~10 | 0.01~5 |
| $CH_4$ | - | - | - | 1~25 |
| CO | - | - | - | 1~23 |
| $H_2$ | - | - | - | 10~55 |
| $H_2O$ | 5~30 | 8~30 | 5~25 | - |
| others | 0.01~0.3 | $CO/NO_2/SO_2/SO_3$ | $SO_2$ : 0.001~0.03 | - |

By applying the flue gas to the catalyst according to the disclosure, the direct conversion of CO and/or $CO_2$ in the flue gas is carried out, and as a result, CO and/or $CO_2$ are converted into useful chemical substances. The chemical substances (i.e., products of the CO and/or $CO_2$ conversion reaction) may include olefins, paraffins, etc. In one example, the olefins and the paraffins may be olefins and paraffins which have a carbon number of 1 to 30. Such products may be utilized as follows according to their carbon numbers (Table 2). In other words, crude may be distilled to produce gases, gasoline, kerosene, diesel, lubricants, paraffin wax, and asphalt, each of which contains components having different carbon numbers and may be used for various purposes. The disclosure may provide such useful components by converting CO and/or $CO_2$ in the flue gas into useful chemical substances through the method according to the disclosure.

[Table 2]

| Product Types | Carbon number range | Purpose of use |
|---|---|---|
| gas | $C_1$ to $C_4$ | gas fuel, plastic synthetic raw materials |
| gasoline | $C_5$ to $C_{12}$ | vehicle fuel |
| kerosene | $C_{12}$ to $C_{16}$ | jet fuel, diesel oil |
| diesel | $C_{16}$ to $C_{18}$ | diesel fuel, pyrolysis raw materials |
| lubricants | $C_{18}$ to $C_{20}$ | lubricants, pyrolysis raw materials |
| paraffin wax | $C_{20}$ to $C_{40}$ | wax |
| asphalt | Above $C_{40}$ | asphalt, tar |

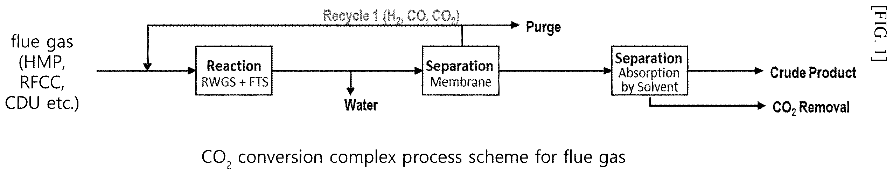

The disclosure relates to an flue gas treatment method including the steps of pretreating a catalyst for direct conversion of $CO_2$ in an flue gas according to the disclosure with a reducing gas; and applying the flue gas to the pretreated catalyst for the direct conversion of $CO_2$ in the flue gas. In this case, a $CO_2$ conversion complex process will be described in brief. The flue gas according to the disclosure refers to gas discharged in the refining and petrochemical processes which includes the HMP, CDU, FCC, and the like processes. The flue gas is used as feed to produce hydrocarbons above $C_1$ in a reactor through reverse water gas shift (RWGS) and Fischer-Tropsch (F-T) reactions. The unreacted gas is supplied back to the feed through a recycle process. Through a final separation process, unreacted $CO_2$ and various refined products are separated and produced (see FIG. 1).

The merits and features of the disclosure, and a method for achieving the same will become more apparent from the embodiments set forth herein. However, the disclosure is not limited to the following embodiments, but may be implemented in various different ways. The embodiments are provided to only complete the disclosure and to allow a person having ordinary knowledge in the art to fully understand the category of the disclosure. The disclosure is merely defined by the category of the claims.

<Materials and Methods>

<Catalyst Preparation Method>

1) Co-Precipitation (CP)

The FeCuKAl (CP) catalyst was prepared as follows: An aqueous solution of FeCuAl resulting from fully dissolving $Fe(NO_3)_3 \cdot 9H_2O$ (0.12 mol/L), $Cu(NO_3)_2 \cdot 3H_2O$ (0.01 mol/L), $Al(NO_3)_3 \cdot 9H_2O$ (0.03 mol/L) in distilled water at room temperature was added to a $K_2CO_3$ (0.25 mol/L) solution while being stirred at 80 °C. The pH of the FeCuAl mixture was adjusted with the $K_2CO_3$ solution until it reached pH 7, and then the precipitated FeCuAl mixture was stirred at 80 °C for 3 hours and cooled to room temperature. The precipitate was filtered and washed with distilled water to remove residual K and impurities, and then dried at 110 °C overnight. The precipitate was calcined in air at 550 °C for 5 hours to obtain the FeCuAl catalyst. The final FeCuKAl catalyst was prepared by incipient wetness impregnation using a $KNO_3$ solution. The FeCuAl catalyst was impregnated with 15wt% K (K/Fe = 0.15), and calcined in air at 550 °C for 5 hours (with a heating rate of 2 °C/min) to obtain FeCuKAl (refer to Journal of $CO_2$ Utilization, 34, (2019), 522-532).

2) Impregnation (IMP)

The FeCuKAl (IMP) catalyst was prepared as follows: An aqueous solution of FeCuAl resulting from fully dissolving $Fe(NO_3)_3 \cdot 9H_2O$ (0.12 mol/L), $Cu(NO_3)_2 \cdot 3H_2O$ (0.01 mol/L), $Al(NO_3)_3 \cdot 9H_2O$ (0.03 mol/L) salt in distilled water at room temperature was added to a $K_2CO_3$ (0.25 mol/L) solution while being stirred at 80 °C. The pH of the FeCuAl mixture was adjusted with the $K_2CO_3$ solution until it reached pH 7, and then the precipitated FeCuAl mixture was stirred at 80 °C for 3 hours and cooled to room temperature. The precipitate was filtered and washed with distilled water to remove residual K and impurities, and then dried at 110 °C overnight. The precipitate was calcined in air at 550 °C for 5 hours to obtain the FeCuAl catalyst. The final FeCuKAl catalyst was prepared by incipient wetness impregnation using a $KNO_3$ solution. The FeCuAl catalyst was impregnated with 15wt% K (K/Fe = 0.15), and calcined in air at 550 °C for 5 hours (with a heating rate of 2 °C/min) to obtain FeCuKAl (refer to Journal of $CO_2$ Utilization, 34, (2019), 522-532).

3) Solid State Reaction (SSR)

The (SSR) catalyst added with FeCuKAl and promoters (Ce, Zn, Zr, and Co) was prepared as follows: $Fe(NO_3)_3 \cdot 9H_2O$, $Cu(NO_3)_2 \cdot 3H_2O$, $KNO_3$, $Al(NO_3)_3 \cdot 9H_2O$ and $NH_4HCO_3$ were placed in a mortar and physicochemically mixed at room temperature for 20 minutes. During the mixing process, the texture of the mixture was changed in phase from solid to liquid and then back to solid, eventually forming a gel-like texture. The gel was further stirred for 2 minutes, and then calcined at 400 °C for 5 hours without washing and drying steps to obtain FeCuKAl.

In the case of adding the promoter, the SSR catalyst was synthesized using the same method as described above, with the addition of metal precursors (i.e., $Fe(NO_3)_3 \cdot 9H_2O$, $Cu(NO_3)_2 \cdot 3H_2O$, $KNO_3$, $Al(NO_3)_3 \cdot 9H_2O$) and a hydrated from of $Ce(NO_3)_3 \cdot 6H_2O$, $Zn(NO_3)_2 \cdot 6H_2O$, $ZrO(NO_3)_2 \cdot xH_2O$ ($ZrO(NO_3)_2$, where $x$ is 1, 2 or 3) or $Co(NO_3)_2 \cdot 6H_2O$.

Below, in the catalyst according to the disclosure, CeAl refer to $CeO_2$-$Al_2O_3$, ZrAl refers to $ZrO_2$-$Al_2O_3$, ZnAl refers to $ZnO$-$Al_2O_3$, and CoAl refers to $Co_2O_3$-$Al_2O_3$. Unless otherwise specifically stated in this specification, Fe, Cu, K, and Al are present at the same contents in the catalysts of the comparative examples and embodiments; 69.8 wt% of Fe, 8.6 wt% of Cu, 9.6 wt% of Al, 12 wt% of K (with a K/Fe weight ratio of 0.17). For instance, FeCuK20CeAl contains 69.8 wt% of Fe, 8.6 wt% of Cu, 9.6 wt% of Al, 12 wt% of K, based on a total of 100 wt% of Fe, Cu, K, and Al.

The catalysts in the following experimental examples were prepared by the SSR method, except where explicitly stated to be prepared by the CP and IMP methods.

<Pretreatment Conditions>

The catalyst was reduced through pretreatment. Under the pretreatment conditions, the catalyst was reduced with syngas ($H_2/CO = 2$) at atmospheric pressure and 350 °C (with a heating rate of 2 °C/min) for 5 hours, cooled down to an actual reaction temperature of 300 °C, purged with $N_2$, and then adjusted to 20 bar ($N_2$). In the subsequent experiments, the pretreatment was conducted either with $H_2/CO=2$ or $H_2$ alone.

<Reaction Operating Conditions>

The reaction operating conditions for the catalyst are as follows: The reaction was carried out while supplying feed gas ($CO_2$, $H_2$, CO, $CH_4$, and $N_2$) under conditions of $H_2/CO_2$ =1.6 at a gas hourly space velocity (GHSV) of 6,250 mL/g·h compared to that of the catalyst, and then the catalytic activity was evaluated. In this case, the activity evaluation refers to evaluation of a direction conversion reaction of $CO_2$ by the catalyst, that is, evaluation of a conversion rate of $CO_2$.

<Conversion Rate>

$X_{CO2}$ represents a conversion rate of $CO_2$ alone, and is calculated using the following Equation 1.

<Equation 1>

$$X_{CO2} = (\text{mol of } CO_2,\text{in} - \text{mol of } CO_2,\text{out}) / \text{mol of } CO_2,\text{in}$$

$X_{CO+CO2}$ represents a conversion rate of both $CO_2$ and CO, and is calculated using the following Equation 2.

$X_{CO+CO2}$ = (mol of $CO_2$,in + mol of CO,in - mol of $CO_2$,out - mol of CO,out)/ (mol of $CO_2$,in + mol of CO,in)  <Equation 2>

The selectivity(S) of products is calculated by the following Equations 3 and 4.

$S_{Cp}$ = (mol of produced $C_p$)/(mol of $CO_2$,in - mol of $CO_2$,out + mol of CO,in - mol of CO,out)×100%  <Equation 3>

(where, p is an integer ranging from 1 to 5)

<Equation 4>

$$S_{C6+} = (1 - S_{C1} - S_{C2} - S_{C3} - S_{C4} - S_{C5}) \times 100\%$$

Where,

in: the amount (feed) of reactant fed into the reactor
(for example, "mol of $CO_2$,in" represents the number of moles of $CO_2$ fed into the reactor)
out: the amount (feed) of reactant remaining after the reaction
(for example, "mol of $CO_2$,out" represents the number of moles of $CO_2$ remaining in the reactor after the reaction)
$C_p$ : hydrocarbons with p carbon atoms
$S_{Cp}$ : The selectivity of $C_p$
(for example, $S_{C2}$ represents the selectivity to hydrocarbons with two carbon atoms)
$S_{C6+}$ : hydrocarbons with six or more carbon atoms

<Experimental example 1>

According to the catalyst preparation methods and the types of promoters used in the catalyst, difference in conversion between CO and $CO_2$ in the flue gas was evaluated.

In this case, the catalyst was reduced at the atmospheric pressure using syngas ($H_2$/CO=2) at 350 °C (with a heating rate of 2 °C/min) for 5 hours, cooled down to an actual reaction temperature of 300 °C, purged with $N_2$, and adjusted to 20 bar ($N_2$), thereby performing the pretreatment.

The reaction operating conditions were as follows: GHSV of 6,250 mL/g·h, 15 hours, 20 bar, 300 °C, and $H_2/CO_2$ = 1.6.

In this case, a FeCuKAI catalyst according to a comparative example 1 was prepared by the IMP method, a FeCuKAI catalyst according to a comparative example 2 was prepared by the CP method, and a FeCuKAI catalyst according to an embodiment 1 was prepared by the SSR method. The other catalysts were prepared by the SSR method.

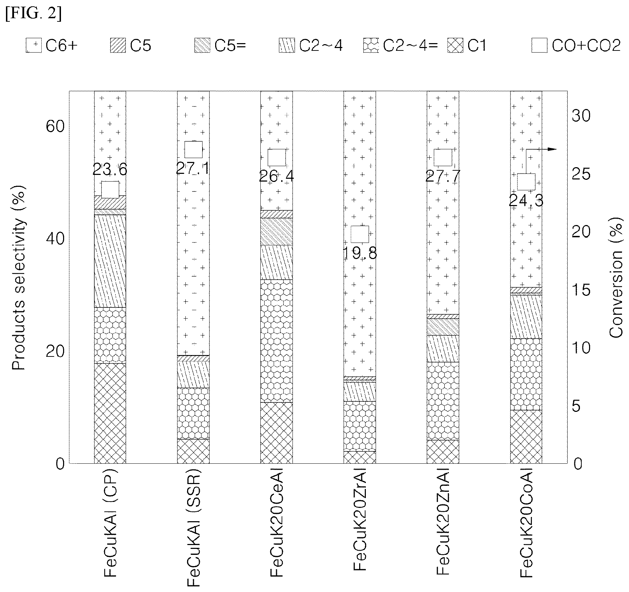

As a result, it was confirmed that $X_{CO2}$, $X_{CO+CO2}$ and the selectivity of products upon conversion were different even for the same FeCuKAl catalyst depending on the methods of preparing the catalyst. In addition, $X_{CO2}$, $X_{CO+CO2}$ and the selectivity of products upon conversion were different depending on the types of promoters contained in the catalyst (see Table 3 and FIG. 2)

In this case, FeCuK20CeAl is a catalyst in which 20wt% of $CeO_2$ is mixed relative to 100 wt% of $Al_2O_3$. FeCuK20ZrAl is a catalyst in which 20wt% of $ZrO_2$ is mixed relative to 100 wt% of $Al_2O_3$. FeCuK20ZnAl is a catalyst in which 20wt% of ZnO is mixed relative to 100 wt% of $Al_2O_3$. FeCuK20CoAl is a catalyst in which 20wt% of $CO_3O_4$, $Co_2O_3$, CoO or a mixture thereof is mixed relative to 100 wt% of $Al_2O_3$.

[Table 3]

| | Catalyst | Method | $X_{CO+CO2}$ (%) | $X_{CO2}$ (%) | selectivity (%) | | | | | | O/P ($C_{2\sim4}$) |
|---|---|---|---|---|---|---|---|---|---|---|---|
| | | | | | $C_1$ | $C_{2\sim4}^=$ | $C_{2\sim4}$ | $C_5^=$ | $C_5$ | $C_6^+$ | |
| Comparative example 1 | FeCuKAl | IMP | 27 | 18.3 | 8.7 | 6.7 | 10.3 | 0.4 | 0.7 | 73.2 | 0.7 |
| Comparative example 2 | FeCuKAl | CP | 23.6 | 13.8 | 17.9 | 9.9 | 16.4 | 1.0 | 2.3 | 52.5 | 0.6 |
| Comparative example 3 | FeCuKAl | SSR | 27.1 | 18.9 | 4.4 | 9.2 | 4.8 | 0.0 | 0.9 | 80.7 | 1.9 |
| Embodiment 1 | FeCuK20CeAl | SSR | 26.4 | 15.1 | 10.9 | 21.8 | 6.1 | 4.8 | 1.3 | 55.1 | 3.5 |
| Embodiment 2 | FeCuK20ZrAl | SSR | 19.8 | 16.9 | 2.4 | 8.8 | 3.4 | 0.3 | 0.7 | 84.4 | 2.6 |
| Embodiment 3 | FeCuK20ZnAl | SSR | 27.7 | 17.2 | 4.2 | 13.9 | 4.8 | 3.0 | 0.8 | 73.3 | 2.9 |
| Embodiment 4 | FeCuK20CoAl | SSR | 24.3 | 16.9 | 9.7 | 12.5 | 7.8 | 0.4 | 0.9 | 68.7 | 1.6 |

O/P: Olefin/Paraffin ratio
=: olefins (e.g., $C_{2\sim4}^=$ : olefins with 2 to 4 carbon atoms, $C_5^=$ : olefins with 5 carbon atoms)
$C_1$ : methane
$C_{2\sim4}$ : paraffins with 2 to 4 carbon atoms,
$C_5$ : paraffins with 5 carbon atoms
$C_6^+$ : olefins and paraffins with 6 or more carbon atoms.

<Experimental Example 2> Evaluation of $CO_2$ adsorption facilitated by addition of $CeO_2$

Difference in the conversion of CO and $CO_2$ in the flue gas of the catalyst according to the addition of $CeO_2$ into the FeCuKAl catalyst, and the types of pretreatments was evaluated.

Compared to the pretreatment using $H_2$/CO as the reducing gas, the experiment was conducted to identify whether CO and $CO_2$ in the reactant feed were converted, by introducing $CeO_2$ to the catalyst when the pretreatment was performed with $H_2$ alone without CO.

In this case, the reaction operating conditions were as follows: GHSV of 6,250 mL/g·h, 15 hours, 20 bar, 300 °C, and $H_2/CO_2$ = 1.6.

As a result, it was confirmed that $X_{CO2}$ and $X_{CO+CO2}$ of the flue gas and the selectivity of products upon conversion were different depending on whether $CeO_2$ was added to the catalyst and the types of reducing gases used in the pretreatment. Further, it was confirmed that the adsorption and conversion of CO and $CO_2$ were facilitated by adding only a small amount of $CeO_2$ to the catalyst even without the pretreatment using CO (i.e., without Fe activation) (see Table 4).

That is, on the conventional Fe-based catalyst without $CeO_2$, the $H_2$/CO pretreatment promotes the conversion of Fe to the active state of $Fe_5C_2$, thereby resulting in high catalytic activity from the beginning. However, when the pretreatment was conducted with hydrogen alone without CO, it was confirmed that CO and $CO_2$ were not converted at all in the initial stage (see the comparative example 4)

On the other hand, when $CeO_2$ is introduced into the Fe-based catalyst, it was confirmed that CO and $CO_2$ in the flue gas were converted even with only the $H_2$-based reducing gas pretreatment without the pretreatment using the conventional $H_2$/CO-based reducing gas (i.e., CO-containing reducing gas) (see the embodiment 5).

In other words, although all catalysts showed the best CO and $CO_2$ conversion results when pretreated with $H_2$/CO reducing gas (see the embodiment 6 and the comparative example 5), it was confirmed that CO and $CO_2$ were converted on the catalysts containing $CeO_2$ even when pretreated with hydrogen alone without CO (see the example 5). This suggests that the oxygen vacancy of $CeO_2$ facilitates the adsorption of reactants such as CO and $CO_2$. In contrast, it was confirmed that no conversion of CO or $CO_2$ was observed on the Fe-based catalysts without containing $CeO_2$ when the reducing gas pretreatment was conducted with hydrogen only without CO (see the comparative example 4).

In this case, FeCu3CeAl is a catalyst in which 3wt% of $CeO_2$ is mixed relative to 100 wt% of $Al_2O_3$.

[Table 4]

| | Catalyst | Pretreatment | $X_{CO+CO2}$ (%) | $X_{CO2}$ (%) | selectivity (%) | | | | | | O/P ($C_{2\sim4}$) |
|---|---|---|---|---|---|---|---|---|---|---|---|
| | | | | | $C_1$ | $C_{2\sim4}^=$ | $C_{2\sim4}$ | $C_5^=$ | $C_5$ | $C_6^+$ | |
| Embodiment 5 | FeCuK3CeAl | $H_2$ | 18.1 | 14.7 | 0 | 6.0 | 1.5 | 0.5 | 1.0 | 0 | 4.0 |
| Embodiment 6 | FeCuK3CeAl | $H_2$+CO | 26.5 | 18.4 | 6.0 | 12.6 | 4 | 0.7 | 1.1 | 75.6 | 3.2 |
| Comparative example 4 | FeCuKAl | $H_2$ | 0 | 0 | 0 | 0 | 0 | 0 | 0 | 0 | 0 |
| Comparative example 5 | FeCuKAl | $H_2$+CO | 24.9 | 18.1 | 5.6 | 10.5 | 5.7 | 0 | 1.1 | 77.1 | 1.9 |

<Experimental Example 3> Evaluation of reaction activity depending on content of $CeO_2$

Difference in the conversion of CO and $CO_2$ in the flue gas of the catalyst according to the content of $CeO_2$ in the catalyst was evaluated.

In this case, the pretreatment was performed in such a manner that the catalyst was reduced with syngas ($H_2$/CO = 2) at the atmospheric pressure and 350 °C (with a heating rate of 2 °C/min) for 5 hours, cooled down to an actual reaction temperature of 300 °C, purged with $N_2$, and then adjusted to 20 bar ($N_2$).

The reaction operating conditions were as follows: GHSV of 6,250 mL/g·h, 15 to 50 hours, 20 bar, 300 °C, and $H_2$/$CO_2$= 1.6.

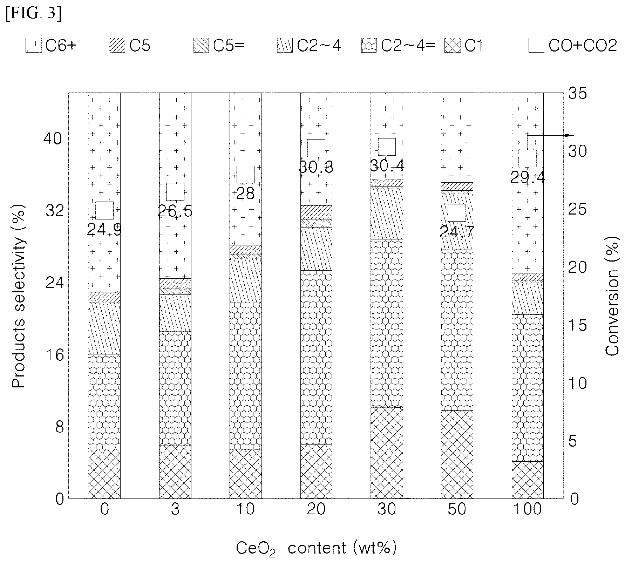

As a result, a conversion rate of CO and $CO_2$ in the flue gas were influenced by the adjustment in the content of $CeO_2$ in the catalyst, thereby allowing selective yields of desired products (see Table 5, and FIG. 3). In this case, FeCuK3CeAl is a catalyst in which 3wt% of $CeO_2$ is mixed relative to 100 wt% of $Al_2O_3$. FeCuK10CeAl is a catalyst in which 10wt% of $CeO_2$ is mixed relative to 100 wt% of $Al_2O_3$. FeCuK20CeAl is a catalyst in which 20wt% of $CeO_2$ is mixed relative to 100 wt% of $Al_2O_3$. FeCuK30CeAl is a catalyst in which 30wt% of $CeO_2$ is mixed relative to 100 wt% of $Al_2O_3$. FeCuK50CeAl is a catalyst in which 30wt% of $CeO_2$ is mixed relative to 100 wt% of $Al_2O_3$. FeCuKCeO_2 is a catalyst which does not contain $Al_2O_3$.

[Table 5]

| | Catalyst | $X_{CO+CO2}$ (%) | $X_{CO2}$ (%) | Selectivity(%) | | | | | | O/P ($C_{2\sim4}$) |
|---|---|---|---|---|---|---|---|---|---|---|
| | | | | $C_1$ | $C_{2\sim4}$ | $C_{2\sim4}$ | $C_5^=$ | $C_5$ | $C_6^+$ | |
| Comparative example 6 | Fecukal | 24.9 | 18.1 | 5.6 | 10.5 | 5.7 | 0.0 | 1.1 | 77.1 | 1.9 |
| Embodiment 7 | Fecuk3ceal | 26.5 | 18.4 | 6.0 | 12.6 | 4.0 | 0.7 | 1.1 | 75.6 | 3.2 |
| Embodiment 8 | Fecuk10ceal | 28.0 | 18.3 | 5.4 | 16.3 | 5.0 | 0.5 | 0.9 | 71.9 | 3.3 |
| Embodiment 9 | Fecuk20ceal | 30.3 | 23.9 | 6.1 | 25.1 | 5.0 | 0.5 | 1.5 | 61.8 | 4.1 |
| Embodiment 10 | Fecuk30ceal | 30.4 | 16.7 | 10.2 | 18.6 | 5.5 | 0.3 | 0.8 | 64.6 | 3.4 |
| Embodiment 11 | Fecuk50ceal | 24.7 | 15.5 | 9.8 | 17.9 | 6.1 | 0.4 | 0.9 | 64.9 | 2.9 |
| Embodiment 12 | Fecukceo$_2$ | 29.4 | 16.8 | 4.1 | 16.4 | 3.4 | 0.3 | 0.8 | 75 | 4.9 |

<Experimental Example 4> Comparison in physicochemical properties between catalysts according to content of $CeO_2$

The physicochemical properties of the catalysts were compared based on the content of $CeO_2$ (0, 3, 20, 50 and 100 wt%) relative to $Al_2O_3$. Here, the catalysts were prepared by loading FeCuK onto support materials (containing $Al_2O_3$ and/or $CeO_2$) through the SSR method, and the physicochemical properties of those catalysts were evaluated. In this case, upon the synthesis of $CeO_2$- $Al_2O_3$, the content of $CeO_2$ (0, 3, 10, 20, 30, 50, and 100 wt%) was varied relative to $Al_2O_3$. Here, 0 wt% and 100 wt% correspond to pure $Al_2O_3$ and $CeO_2$, respectively.

As a result, it was confirmed that mixing with amorphous gamma-$Al_2O_3$ led to a decrease in the crystallite size of $CeO_2$, and an increase in the specific surface area ($S_{specific\ surface\ area}$) of $CeO_2$. Further, metal substitution between $Ce^{4+}$ of $CeO_2$ and Al generated $Ce^{3+}$, and a $Ce^{3+}/Ce^{4+}$ ratio of the catalyst was varied depending on the content of $CeO_2$. FIG. 4a shows an XRD analysis result for checking the crystal structure of the $CeO_2$-$Al_2O_3$ support according to the content of $CeO_2$, in which the increase in the content of $CeO_2$ on the amorphous $Al_2O_3$ support causes the peaks of (111), (200), (220) and (311) planes of $CeO_2$ to become more prominent. FIG. 4b shows X-ray photoelectron spectroscopy (XPS) results, in which both $Ce^{4+}$ and $Ce^{3+}$ coexist as the content of $CeO_2$ increases relative to $Al_2O_3$. In this case, the ratio of $Ce^{3+}/Ce^{4+}$ existing in the synthesized $CeO_2$-$Al_2O_3$ is varied depending on the content of $CeO_2$, and the ratio of $Ce^{3+}/Ce^{4+}$ ranges from 0 to 2. Table 6 shows the physicochemical properties (based on specific surface analysis and XPS) of the catalysts according to the content of $CeO_2$, in which the degree of metal substitution in the mixture of $CeO_2$ and $Al_2O_3$ was confirmed by analyzing the bonding states based on the electronic transition states of Ce atoms through the specific surface analysis and the XPS.

[Table 6]

| | Support | $S_{specific}$ surface area (m$^2$/g) | Pore volume (cm$^3$/g) | Ce$^{4+}$ (%) | | | | | | Ce$^{3+}$ (%) | | | Ratio of Ce$^{3+}$/Ce$^{4+}$ |
|---|---|---|---|---|---|---|---|---|---|---|---|---|---|
| | | | | $V'''$ | $v''$ | $v$ | $u''''$ | $u''$ | u | $v'$ | $V^0$ | $u'$ | |
| Comparative example 7 | mAl$_2$O$_3$ | 284 | 0.4 | - | - | - | - | - | - | - | - | - | - |
| Embodiment 13 | m20CeAl | 235 | 0.43 | 15.4 | 6.7 | 13.8 | 14.2 | 9.2 | 16.8 | 12.2 | 6.1 | 5.6 | 0.3 |
| Embodiment 14 | m3CeAl | 280 | 0.4 | 4.3 | 4.8 | 9.7 | 8.8 | 3.4 | 13.1 | 17.4 | 8.8 | 29.7 | 1.3 |
| Embodiment 15 | m10CeAl | 259 | 0.5 | 7.2 | 5.4 | 11.7 | 10.8 | 8.4 | 13.7 | 13.8 | 8.2 | 20.8 | 0.8 |
| Embodiment 16 | m50CeAl | 167 | 0.32 | 19.0 | 7.2 | 15.8 | 17.3 | 11.4 | 15.0 | 9.7 | 3.2 | 1.2 | 0.2 |
| Embodiment 17 | mCeO$_2$ | 45 | 0.2 | 21.5 | 8.1 | 19.4 | 20.7 | 14.8 | 15.5 | 0.0 | 0.0 | 0.0 | 0 |

Here, 'm' stands for mesoporous. In other words, for example, m20CeAl refers to a mesoporous 20CeAl support.

<Experimental Example 5> Activity evaluation of catalysts according to metal loading order upon catalyst preparation

The activity of the catalyst was evaluated according to metal loading order when the catalyst was prepared by the SSR method. In this case, the catalyst preparation method is as follows:

K/FeCu20CeAl : A $KNO_3$ aqueous solution was applied to FeCu20CeAl prepared by the SSR method, thereby performing the impregnation. 15wt% K (K/Fe = 0.15) was impregnated onto the FeCu20CeAl catalyst, and followed by calcination in air at 550 °C four 5 hours (with a heating rate of 2 °C/min), thereby synthesizing K/FeCu20CeAl.

FeCuK/20CeAl : A mixed aqueous solution of $Fe(NO_3)_3 \cdot 9H_2O$, $Cu(NO_3)_2 \cdot 3H_2O$, $KNO_3$ was impregnated onto 20CeAl prepared by the SSR method, and followed by calcination in air at 400 °C for 5 hours (with a heating rate of 2 °C/min), thereby synthesizing FeCuK/20CeAl.

Cu/FeK20CeAl : A aqueous solution of $Cu(NO_3)_2 \cdot 3H_2O$ was impregnated onto FeK20CeAl prepared by the SSR method, and followed by calcination in air at 550 °C four 5 hours (with a heating rate of 2 °C/min), thereby synthesizing Cu/FeK20CeAl.

In the pretreatment, the catalysts were reduced with syngas ($H_2$/CO = 2) at atmospheric pressure and 350 °C (with a heating rate of 2 °C/min) for 5 hours, cooled down to an actual reaction temperature of 300 °C, purged with $N_2$, and then adjusted to 20 bar ($N_2$).

Further, the reduced catalysts were reacted under condition: GHSV of 6,250 mL/g·h, 15 to 50 hours, 20 bar, 300 °C, and $H_2/CO_2$ = 1.6.

As a result, it was confirmed that even for the catalysts containing the same metal components, there are differences in the catalytic activity according to the order of adding the metal precursor during the synthesis of the catalysts (see Table 7).

In this case, FeCuK20CeAl is a catalyst in which 20wt% of $CeO_2$ is mixed relative to 100 wt% of $Al_2O_3$. K/FeCu20ZrAl is a catalyst in which 20wt% of $CeO_2$ is mixed relative to 100 wt% of $Al_2O_3$. FeCuK/20CeAl is a catalyst in which 20wt% of $CeO_2$ is mixed relative to 100 wt% of $Al_2O_3$. Cu/FeK20CeAl is a catalyst in which 20wt% of $CeO_2$ is mixed relative to 100 wt% of $Al_2O_3$.

[Table 7]

| | Catalyst | $X_{CO+CO2}$ (%) | $X_{CO2}$ (%) | Selectivity (%) | | | | | | O/P ($C_{2\sim4}$) |
|---|---|---|---|---|---|---|---|---|---|---|
| | | | | $C_1$ | $C_{2\sim4}^=$ | $C_{2\sim4}$ | $C_5^=$ | $C_5$ | $C_6^+$ | |
| Embodiment 9 | Fecuk20ceal | 30.3 | 23.9 | 6.1 | 25.1 | 5.0 | 0.5 | 1.5 | 61.8 | 4.1 |
| Embodiment 18 | K/fecu20ceal | 35.0 | 22.2 | 0.0 | 13.3 | 4.9 | 0.3 | 0.8 | 80.7 | 2.7 |
| Embodiment 19 | Fecuk/20ceal | 27.9 | 19.1 | 5.6 | 10.3 | 3.6 | 0.3 | 2.0 | 78.2 | 2.9 |
| Embodiment 20 | Cu/fek20ceal | 36.0 | 22.2 | 5.1 | 15.5 | 4.2 | 0.3 | 0.7 | 74.2 | 3.7 |

<Experimental Example 6> Comparison between adsorption amounts of CO and $CO_2$ according to content of $CeO_2$

Through CO and $CO_2$-TPD analysis, the adsorption amounts and desorption distributions of CO and $CO_2$ were confirmed. In addition, it was confirmed that the adsorption amount is varied depending on the content of $CeO_2$ in the catalyst

First, prior to the adsorption of that gas (CO or $CO_2$), the catalyst was pretreated under He gas at 600 °C for 1 hour to remove moisture from the catalyst used as an analysis sample, and then that gas (CO or $CO_2$) was introduced at 100 °C for 1 hour to allow the adsorption onto the catalyst. After sufficient adsorption of that gas, the catalyst sample was heated from 100 °C to 700 °C (at a rate of 10 °C/min) under He gas used as carrier gas so that the gas (CO or $CO_2$) adsorbed thereon can be desorbed, thereby monitoring the amount of that gas.

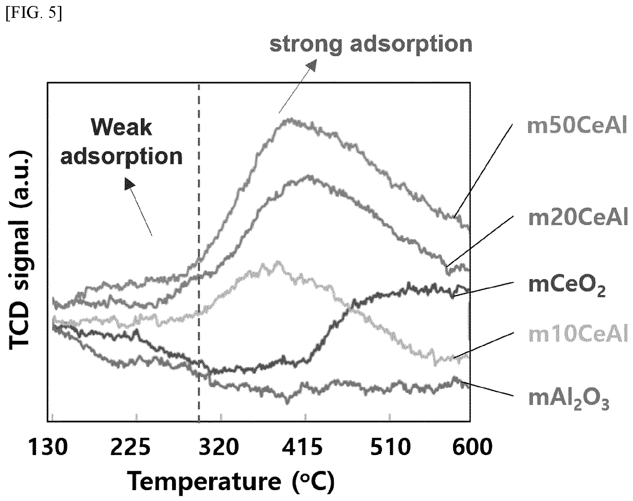

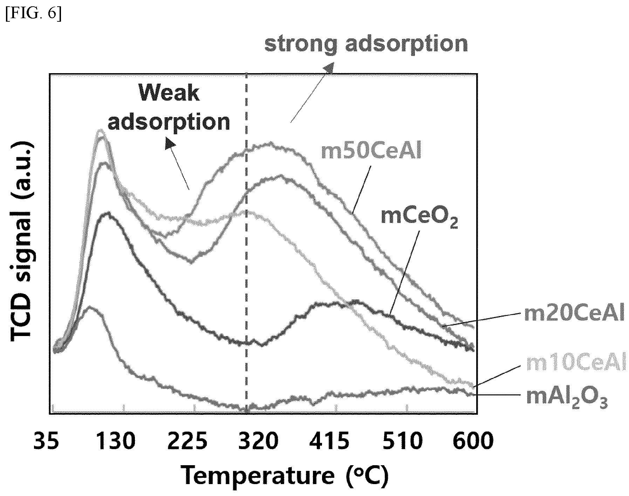

According to the disclosure, the feed, i.e., the flue gas contains CO, and $CO_2$ is converted into CO through a reverse water gas shift (RWGS) reaction during the $CO_2$ hydrogenation process. The resulting CO is converted into products with a carbon chain growth formed undergoing the Fischer-Tropsch (F-T) reaction, and thus CO in the feed al contributes to the selectivity of products. Through the analysis technique of the experimental example 6, it is possible to determine how much reactant, i.e., CO or $CO_2$ is absorbed onto the surface of the catalyst, and how much thermal energy is required for the desorption. Referring to FIGS. 5 and 6, the data x-axis represents temperature, and a higher temperature indicates that CO or $CO_2$ adsorbed onto the surface of the catalyst is more strongly adsorbed, thereby requiring a higher temperature for the desorption.

$CeO_2$ is one of metal oxides that inherently possesses basicity, and thus facilitates the adsorption of $CO_2$.

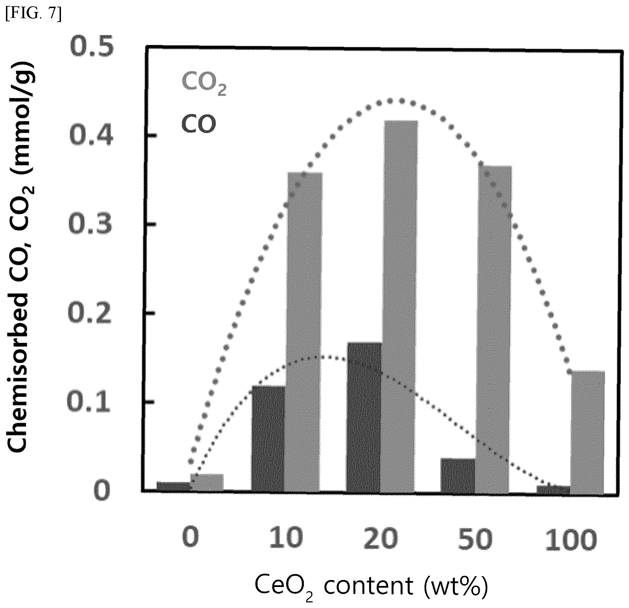

Therefore, when the catalyst contains only $Al_2O_3$ without $CeO_2$, little adsorption of CO and $CO_2$ was done. On the other hand, the adsorption of CO and $CO_2$ increases as the content of $CeO_2$ in the catalyst gradually increases, as confirmed by the analysis data (see FIGS. 5 to 7, and Table 8).

[Table 8]

| | Support | Content of $CeO_2$ content (wt%) | Adsorption amount (mmol/g) | | | |
|---|---|---|---|---|---|---|
| | | | CO | $CO_2$ | | |
| | | | | Below 300°C | Above 300°C | Total adsorption amount |
| Comparative example 7 | $mAl_2O_3$ | 0 | 0.01 | 0.02 | - | 0.02 |
| Embodiment 13 | m20CeAl | 20 | 0.17 | 0.11 | 0.31 | 0.42 |
| Embodiment 15 | m10CeAl | 10 | 0.12 | 0.13 | 0.23 | 0.36 |
| Embodiment 16 | m50CeAl | 50 | 0.04 | 0.14 | 0.23 | 0.37 |
| Embodiment 17 | $mCeO_2$ | 100 | 0.01 | 0.09 | 0.05 | 0.14 |

**Claims**

1. A catalyst for direct conversion of $CO_2$ in flue gas, comprising a promoter selected from a group consisting of Ce, Zn, Zr and Co.

2. The catalyst of claim 1, wherein the catalyst contains Fe.

3. The catalyst of claim 1, wherein the catalyst exhibits conversion activity for CO or $CO_2$ in the flue gas without pretreatment using CO.

4. The catalyst of claim 1, wherein the catalyst is reduced by treatment with one or more reducing gases selected from a group consisting of $CH_4$, $H_2$, CO, $C_3H_8$, and $C_4H_{10}$.

5. The catalyst of claim 1, wherein the catalyst contains 1 to 60 wt% of one or more oxides selected from a group consisting of $CeO_2$, $ZrO_2$, ZnO and $Co_mO_n$, based on 100 wt% of $Al_2O_3$, where m is 1, 2 or 3, and n is 1, 2, 3 or 4.

6. The catalyst of claim 5, wherein $Co_mO_n$ comprises $Co_3O_4$, CoO or $Co_2O_3$.

7. The catalyst of claim 1, wherein the catalyst exhibits conversion activity for $CO_2$ in the flue gas with a ratio of $H_2/CO_2$ ranges from 0.0001 to 2.

8. The catalyst of claim 1, wherein the catalyst directly converts $CO_2$ in the flue gas through a single process.

9. An flue gas treatment method comprising:

   pretreating the catalyst of claim 1 for direct conversion of $CO_2$ in flue gas with a reducing gas; and
   applying the flue gas to the pretreated catalyst for the direct conversion of $CO_2$ in the flue gas.

10. The flue gas treatment method of claim 9, wherein the flue gas contains one or more components selected from a group consisting of $H_2$, $CO_2$, CO, $CH_4$, S, $O_2$, $N_2$ $H_2O$, $SO_x$, $NO_x$ and $H_2O$, where $x$ is an integer not greater than 3.

11. The flue gas treatment method of claim 9, wherein the treatment method does not comprise one or more selected from a group consisting of a gasification process, a gas purification process, an acid gas removal process, a reforming process and a $CO_2$ capture process.

[FIG. 1]

CO$_2$ conversion complex process scheme for flue gas

[FIG. 2]

[FIG. 3]

[FIG. 4]

[FIG. 5]

[FIG. 6]

[FIG. 7]

## INTERNATIONAL SEARCH REPORT

| International application No. |
| --- |
| **PCT/KR2023/019823** |

### A. CLASSIFICATION OF SUBJECT MATTER

**B01J 23/83**(2006.01)i; **B01J 23/745**(2006.01)i; **B01J 21/02**(2006.01)i; **B01J 21/06**(2006.01)i; **B01J 23/06**(2006.01)i; **B01J 23/75**(2006.01)i; **B01J 37/02**(2006.01)i; **B01J 37/16**(2006.01)i; **B01D 53/86**(2006.01)i

According to International Patent Classification (IPC) or to both national classification and IPC

### B. FIELDS SEARCHED

Minimum documentation searched (classification system followed by classification symbols)

B01J 23/83(2006.01); B01J 23/745(2006.01); B01J 23/755(2006.01); B01J 27/22(2006.01); C01B 32/40(2017.01); C07C 1/12(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 이산화탄소(carbon dioxide, CO2), 배가스(purge gas), 전환(conversion), Ce, Zn, Zr, Co, 조촉매(cocatalyst), 촉매(catalyst)

### C. DOCUMENTS CONSIDERED TO BE RELEVANT

| Category* | Citation of document, with indication, where appropriate, of the relevant passages | Relevant to claim No. |
| --- | --- | --- |
| X | KR 10-2019-0136978 A (KOREA RESEARCH INSTITUTE OF CHEMICAL TECHNOLOGY) 10 December 2019 (2019-12-10) <br> See paragraphs [0002]-[0084]; and claim 9. | 1-4,7-11 |
| Y | | 5-6 |
| Y | YANG, L. et al. Highly active and selective multicomponent Fe-Cu/CeO2-Al2O3 catalysts for CO2 upgrading via RWGS: impact of Fe/Cu ratio. ACS Sustainable Chem. Eng. 2021, vol. 9, no. 36, 12155-12166. <br> See abstract; page 11; and table 1. | 5-6 |
| A | JP 2019-202269 A (NAGOYA UNIV.) 28 November 2019 (2019-11-28) <br> See entire document. | 1-11 |
| A | KR 10-2021-0111580 A (KOREA RESEARCH INSTITUTE OF CHEMICAL TECHNOLOGY) 13 September 2021 (2021-09-13) <br> See entire document. | 1-11 |

☑ Further documents are listed in the continuation of Box C.    ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **22 March 2024** | **25 March 2024** |

| Name and mailing address of the ISA/KR | Authorized officer |
| --- | --- |
| **Korean Intellectual Property Office** <br> **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2023/019823** |

**C. DOCUMENTS CONSIDERED TO BE RELEVANT**

| Category* | Citation of document, with indication, where appropriate, of the relevant passages | Relevant to claim No. |
| --- | --- | --- |
| A | CN 112169815 A (DALIAN INSTITUTE OF CHEMICAL PHYSICS, CHINESE ACADEMY OF SCIENCES) 05 January 2021 (2021-01-05)<br>See entire document. | 1-11 |

Form PCT/ISA/210 (second sheet) (July 2022)

22

## INTERNATIONAL SEARCH REPORT
### Information on patent family members

International application No.

**PCT/KR2023/019823**

| Patent document cited in search report | | | Publication date (day/month/year) | Patent family member(s) | | | Publication date (day/month/year) |
|---|---|---|---|---|---|---|---|
| KR | 10-2019-0136978 | A | 10 December 2019 | CN | 112105593 | A | 18 December 2020 |
| | | | | CN | 112105593 | B | 10 November 2023 |
| | | | | KR | 10-2183215 | B1 | 25 November 2020 |
| | | | | US | 2021-0230005 | A1 | 29 July 2021 |
| | | | | WO | 2019-231237 | A1 | 05 December 2019 |
| JP | 2019-202269 | A | 28 November 2019 | None | | | |
| KR | 10-2021-0111580 | A | 13 September 2021 | None | | | |
| CN | 112169815 | A | 05 January 2021 | CN | 112169815 | B | 12 April 2022 |

Form PCT/ISA/210 (patent family annex) (July 2022)

**EP 4 631 620 A1**

**Patent documents cited in the description**

- KR 102465990

- KR 1020210111580